# EUROPEAN PATENT SPECIFICATION

(11) **EP 2 624 733 B1**
(45) Date of publication and mention of the grant of the patent: **10.06.2015**
(21) Application number: 11764776.8
(22) Date of filing: 07.10.2011
(51) Int. Cl.: A47J 31/52

(54) **BEVERAGE DISPENSER WITH SELECTABLE BEVERAGE SENSORY PARAMETERS**
GETRÄNKESPENDER MIT AUSWÄHLBAREN GETRÄNKESENSORPARAMETERN
DISTRIBUTEUR DE BOISSONS PERMETTANT LA SÉLECTION DE PARAMÈTRES SENSORIELS DE BOISSON

(30) Priority: 07.10.2010 EP 10186778; 07.10.2010 EP 10186777
(43) Date of publication of application: 14.08.2013
(73) Proprietor: Nestec S.A., 1800 Vevey (CH)
(72) Inventor: FILLIOL, Carine, F-25370 Métabief (FR); BERTHET, Aurore, CH-1009 Pully (CH); PINEAU, Nicolas, CH-1673 Auboranges (CH); CORNEAU, Ingrid, F-25370 Metabief (FR); MANDRALIS, Zenon Ioannis, CH-1052 Le Mont Sur Lausanne (CH); KERNKAMP, Michiel, CH-1010 Lausanne (CH); MURPHY, Richard Luke, Chagrin Falls Ohio 44070 (US)
(74) Representative: Ducreux, Marie
(86) International application number: PCT/EP2011/067546
(87) International publication number: WO 2012/045860

(56) References cited:
- EP-A1- 2 279 683
- WO-A1-2010/010587
- WO-A2-2007/003990
- GB-A- 2 442 223
- US-A1- 2006 188 620
- US-A1- 2006 278 093

## Description

### Field of the invention

The present invention relates to a beverage dispenser for preparing beverages - in particular coffee - according to a choice of the consumer based on the beverage sensory profile.

### Background of the invention

The invention particularly relates to beverage dispensers preparing coffee based beverages from a soluble coffee product. This soluble coffee product is diluted with a diluent usually hot water. The dilution can be operated in a dilution or mixing chamber and, depending on the nature of the beverage ordered by the consumer, the mixture of the coffee product and the diluent can be whipped to create foam at the top of the beverage.

These dispensers generally present a user interface proposing to the consumer a choice of different coffee based beverages types like espresso, coffee with milk, American coffee, cappuccino, macchiato, ... The interface also usually enables to select the sugar intensity, the temperature or the volume of the beverage. Usually the coffee based beverages types have been market tested and the recipes for their preparation are set in a memory on which the control unit of the dispenser relies. Consequently, the consumers can only get a limited choice of beverages in the dispenser. Then there is a need for a dispenser that could propose to the consumers beverages different from those initially set in the dispenser and that could enable the consumers to define their own beverages according to their own taste.

US 2006/0188620 describes a system for making and delivering a customized coffee beverage in which the customer can select the size, the colour, the strength, the temperature of the coffee and the introduction of additional flavours. The control of the strength of the coffee is made by utilization of delayed dilution, delayed mixing and/or delayed filtering of coffee extracts issued from roast and ground coffee brewing. Liquid extracts of different strengths are produced and can then be mixed so as to reach the strength desired by the customer.

In the field of beverage dispensers preparing beverages from soluble ingredients, WO 2009/032877 describes a juices based beverages dispenser in which the consumer can select the nature of the different components of her/his beverage and the ratio of these selected components. This process enables the consumer to invent her/his own recipe. Due to the fact that the consumer knows exactly the taste of different juice flavours (apple, orange, ...) she/he can guess what the resulting mixture will taste.

In the field of beverage dispensers preparing beverages from a soluble coffee product, there is not such a large choices of flavours with which the consumer can play. Actually the coffee dispensers generally comprise two sources of coffee ingredient: a soluble coffee powder and a soluble decaffeinated coffee powder. In such coffee dispensers, there is a need to propose to consumers to change the beverages recipes initially set in the dispenser so that the consumer can get the coffee beverage he likes in terms of coffee sensory profile not only in terms of the strength and colour of the coffee beverage, but also in terms the quality of the crema at the top of the coffee beverage, of the aroma and of the taste of the coffee beverage.

The aim of the present invention is to propose a coffee based beverage dispenser preparing beverage from coffee soluble ingredients which prepare the beverage according to a sensory profile defined by the consumer.

It has also been observed that the taste of consumers varies from one world area to another : European consumers do not drink their coffee like American. Asian consumers like their coffee in another third way too. Yet the same beverage dispenser is generally produced for being sold and used in every part of the world. If the dispenser is set for a European consumer taste, it won't answer the demand of the consumers of the rest of the world and won't have success there.

Besides the beverage dispensers produced by the dispensers' manufacturers are usually sold to customers or operators who manage the operation of the dispensers. These operators usually want all their dispensers to deliver the same type of beverages, in particular presenting the same taste, so as to develop consumers' loyalty. Yet again the same beverage dispenser is generally produced for being sold to all operators. If the dispenser is set for one operator taste, it won't answer the demand of the other operators.

Therefore there is need for manufacturing dispensers that can be individually set for answering all the expectations of the consumers or the operators.

In particular there is a need for a dispenser that incorporates usual components for making a beverage but that can be set for providing beverages according to the consumer or the operator taste.

### Summary of the invention

According to a first aspect, the disclosure concerns a beverage dispenser comprising :
- means for preparing a beverage from at least one soluble concentrated food ingredient,
- a user interface operable to interact with a consumer for presenting to the consumer at least one of a list of selectable sensory parameters and for receiving at least one input from the consumer regarding at least one of these parameters,
- a control unit controlling the means for preparing a beverage and dispensing a beverage based at least in part on the at least one input of the consumer regarding at least one of the selectable sensory parameters.

Generally the means for preparing a beverage from at least a concentrated food ingredient comprises :
- at least one source of a concentrated food ingredient,
- at least one dosing device operably associated with the source of concentrated food ingredient,
- a source of diluent,
- a pump operably associated with the source of diluent,
- a whipping device operably associated with the diluent pump means and the at least one concentrated food ingredient dosing device for receiving and whipping the source of diluent and the concentrated food ingredient to prepare a product beverage.

The source of diluent and the pump are generally connected through a liquid circulation circuit. This circuit can comprise a heater.

The concentrated food ingredient can be any kind of food ingredient that is soluble in water. It can be a liquid concentrate but it is preferably a soluble powder. It can be a milk powder or a chocolate powder. It is most preferably is a soluble coffee powder. The concentrated food ingredient is usually stored in a container. The source of concentrated food ingredient is preferably placed above the dosing device so that the source of concentrated food ingredient can fall by gravity in the dosing device. In the present invention "soluble" means that the concentrated food ingredients can be completely dissolved in water. Consequently the soluble concentrated food ingredients used in the present invention do not encompass roast and ground coffee or herbal or tea leaves in which only a part of the ingredients are extracted and dissolved in water.

The dosing device can be any device able to meter a dose of powder like a rotary pierced disc, a dosing auger, a shut off valve, an endless screw, a barrel, a sliding chamber or other known powder dosing devices. When a liquid concentrated food ingredient is used, the dosing means can be a non-return valve associated with a peristaltic pump. It can be part of the container holding the concentrated food ingredient or it can be an independent device in which an outlet of the source of a concentrated food ingredient emerges.

Preferably the dispenser can comprise several sources of different soluble concentrated coffee products. These different concentrated coffee products can be selected between coffees of different origins, of different roasting colours, of different caffeine contents. it can also be different blends of different soluble coffees or soluble coffees issued from blends of coffees of different origins.

The diluent is usually water, preferably hot water. This hot water can be heated and stored in a boiler of the dispenser. It can also be heated on demand by an instant heater.

The pump means and the dosing unit deliver the diluent and the concentrated food ingredient to a whipping device. The whipping device dissolves the soluble food ingredient with water and eventually creates foam in the mixture of diluent and soluble food ingredient. It can comprise a dissolution chamber in which the diluent and the concentrated food ingredient are introduced and mixed together and a whipping chamber in which a whipper froths the mixture issued from the dissolution chamber.

The dispenser usually comprises a housing hiring the means for preparing a beverage and having a receiving place for at least a receptacle to be filled with the beverage. This receiving place can comprise a drip tray having a support member for the receptacle. Typically, the beverage preparation machine comprises housing for housing as least the beverage preparation means and the control unit and for bearing a user-interface.

The dispenser further comprises a control unit for controlling all processes within the dispenser. More specifically the control unit can instruct the at least one dosing device, the pump and eventually the whipping device based at least in part on the at least one input of the consumer regarding at least one of the selectable sensory parameters. In particular the control unit can control :
- the selection of one or several concentrated food ingredient(s),
- the concentrated food ingredient(s) dosage,
- the water delay and eventually the whipping time and
- the whipping device speed based at least in part on the at least one input of the consumer regarding at least one of the selectable sensory parameters. The water delay corresponds to the length of time for introducing the water in the receptacle in which it is mixed with the concentrated food ingredient.

The machine preferably comprises a user interface screen for providing information to the user and for accepting input by the consumer. The user interface screen can be a touch-sensitive screen and/or comprise touch-sensitive input parts. The machine may have a user-input device, such as a touch pad, one or more buttons and/or switches or similar devices known in the art.

The selectable beverage sensory parameters presented by the user interface to the consumer relate at least to one of the following beverage sensory properties : the foam or crema quality, the aroma, the flavour and/or the mouthfeel. The foam generally relates to beverages comprising at least milk and/or chocolate while the crema relates to black coffee beverages. Aroma refers to what is sensed by the nose and generally depends on the volatile compounds of the beverage. Flavour is what is sensed by a combination of taste as sensed by the tongue.

Concerning the sensory parameter relative to the crema quality of a black coffee or the foam quality for other beverages than black coffee, the user interface can present to the consumer at least one sensory parameter relative to the crema or the foam quality and propose to the consumer to select at least one crema or foam quality property comprised in the list of : crema or foam quantity, crema or foam stiffness, crema or foam density, crema or foam colour.

Concerning the sensory parameter relative to the aroma of the beverage, the user interface can present to the consumer at least one beverage sensory parameter relative to the aroma and propose to the consumer to select at least one aroma property comprised in the list of: coffee aroma, roasty aroma, fruity aroma.

Concerning the coffee sensory parameter relative to the flavor, the user interface can present to the consumer at least the beverage sensory parameter relative to the flavor and propose to the consumer to select at least one or property comprised in the list of: bitterness, spiciness, acidity.

Concerning the beverage sensory parameter relative to the mouthfeel, the user interface can present to the consumer at least the beverage sensory parameter relative to the mouthfeel and propose to the consumer to select at least one mouthfeel property comprised in the list of : body, persistency, astringency.

According to a specific embodiment the user interface can present to the consumer at least one list of different selectable concentrated coffee products and an adjustable ratio of said concentrated coffee products and propose to the consumer to select at least one concentrated coffee product and optionally its ratio if different concentrated coffee products are selected.

When the dispenser is mainly a coffee dispenser, it can comprise at least one additive source, the additive being comprised in the list of a sweetener, a milk product or a chocolate product. The dispenser can comprise several additive sources of milk products selected in the list of skimmed milk, full fat milk, soya, ... The dispenser can also comprise several additive sources of chocolate products of different origins.

The user interface can present to the consumer at least one of a list of parameters relative to the choice of the additives and their ratio.

According to a particular embodiment of the dispenser of the disclosure :
- the dispenser can comprise n storing means separately storing n different soluble concentrated coffee products, each storing means being operably associated with a means for dosing the stored soluble concentrated coffee product, and
- the user interface is operable to interact with a consumer for presenting to the consumer at least n+1 selectable predefined coffee based beverages and for receiving :
   - either one input from the consumer for selecting one of said predefined coffee based beverages,
   - or one input from the consumer for modifying one of said predefined coffee based beverages, and
- the control unit can control the means for dosing the stored concentrated coffee products based at least in part on the at least one input of the consumer regarding the selection or the modification of a predefined coffee based beverage.

Preferably this dispenser comprises at least 2 storing means separately storing different soluble concentrated coffee products, which means that n ≥ 2.

The control unit of this dispenser can control the means for dosing the stored concentrated coffee products based at least in part on the at least one input of the consumer regarding the selection or the modification of the selectable predefined coffee based beverages. In particular the control unit can control at least one of the following parameters : the selection of at least one of the concentrated coffee product, the dosage of the concentrated coffee product(s), the diluent delay, the whipper time, the whipper speed based at least in part on the at least one input of the consumer regarding the selection or the modification of the selectable predefined coffee based beverages. The control unit controls the means for dosing the stored concentrated coffee product so that the concentrated coffee product(s) that enter(s) in the preparation of the selected beverage can be dosed based on the input of the consumer.

According to a second aspect, the disclosure concerns a method for operating a beverage dispenser comprising the steps of:
- presenting at least one of a list of selectable sensory parameters,
- receiving at least one input regarding at least one of these parameters,
- dispensing a beverage based at least in part on the selectable parameters.

The selectable sensory parameters can be chosen in the list of the foam or crema quality, the aroma, the flavor and/or the mouthfeel of the beverage.

The method is preferably applied in a dispenser comprising :
- at least one dosing device operably associated with at least one source of concentrated food ingredient,
- a pump operably associated with a source of diluent,
- a mixing device operably associated with the pump and the at least one concentrated food ingredient dosing device, preferably a whipping device,
and wherein the beverage product based at least in part on the selectable parameters is dispensed by instructing the at least one dosing device, the pump and the mixing device.

In particular the beverage product can be dispensed by monitoring the activation of the at least one dosing device, the water delay and eventually the whipping speed of the whipping device.

The activation of the dosing device enables simultaneously the delivery of the selected concentrated food ingredient and the control of its dosing.

According to a particular embodiment, the method can compris means configured for preparing a beverage from at least one concentrated soluble coffee product and n storing means configured for separately storing n different soluble concentrated coffee products, said method comprising the steps of:
- presenting to the consumer at least one of a list of selectable predefined coffee based beverages,
- receiving at least one input from the consumer regarding the selection of one of said predefined coffee based beverages or the modification of one of said predefined coffee based beverages,
- dispensing the selected predefined coffee based beverage if the user interface receives one input from the consumer for selecting one of the predefined coffee based beverages, or dispensing a modified predefined coffee based beverage if the user interface receives one input from the consumer for modifying one of the predefined coffee based beverages.

Preferably the method comprises the steps of :
- presenting to the consumer at least one of a list of selectable coffee sensory parameters modifying the selectable predefined coffee based beverages,
- receiving at least one input regarding at least one of these parameters,
- dispensing a modified predefined coffee based beverage based at least in part on the selectable parameters.

The control unit can control the means for dosing the concentrated coffee products based at least on a predefined coffee based beverage recipe stored data.

According to a third aspect the disclosure concerns a program stored on a memory device and executable by a control unit of a beverage dispenser, said dispenser comprising :
- at least one dosing device operably associated with at least one source of soluble food ingredient,
- a pump operably associated with a source of diluent,
- a whipping device operably associated with the pump and the at least one concentrated coffee product dosing device,
   wherein said program when being executed is arranged to perform the steps of:
- presenting at least one of a list of selectable sensory parameters (P₁, P₂, P₃, P₄), chosen in the list of the foam or crema quality, the aroma, the flavor and/or the mouthfeel of the beverage,
- receiving at least one input regarding at least one of these parameters,
- dispensing a beverage based at least in part on the selectable parameters.

According to a fourth aspect the disclosure concerns a method for setting a beverage dispenser according to a sensory profile, said dispenser comprising :
- at least one dosing device operably associated with at least one source of soluble food ingredient,
- a pump operably associated with a source of diluent,
- a whipping device operably associated with the pump and the at least one concentrated coffee product dosing device,
the method comprising the steps of:
- defining the parameters of the sensory profile (P₁, P₂, P₃, P₄), chosen in the list of the foam or crema quality, the aroma, the flavor and/or the mouthfeel of the beverage,
- setting instructions for the at least one dosing device, the pump and/or the whipping device based at least in part on the defined parameters.

This method enables the setting of a dispenser so that it dispenses beverages according to a defined sensory profile. The operator of the dispenser can identify the type of sensory profile he wants to be delivered by the dispenser. This type of sensory profile can be defined for each type of generic beverages that can be produced by the dispenser like : espresso coffee, long coffee, cappuccino, latte macchiato, chocolate, tea, ... The sensory profile of each generic beverage is defined by identifying its parameters (P₁, P₂, P₃, P₄), chosen in the list of the foam or crema quality, the aroma, the flavor and/or the mouthfeel of the beverage. Based on these parameters, instructions for the at least one dosing device, the pump and/or the whipping device are set and applied to the dispenser.

According to a fifth aspect the disclosure concerns a program for setting a beverage dispenser according to defined parameters (P₁, P₂, P₃, P₄) of a sensory profile chosen in the list of the foam or crema quality, the aroma, the flavor and/or the mouthfeel of the beverage, said dispenser comprising :
- at least one dosing device operably associated with at least one source of soluble food ingredient,
- a pump operably associated with a source of diluent,
- a whipping device operably associated with the pump and the at least one concentrated coffee product dosing device,
wherein said program when being executed is arranged to perform the steps of setting instructions for the at least one dosing device, the pump and/or the whipping device based at least in part on the defined parameters of the sensory profile.

### Brief description of the drawings

The characteristics and advantages of the invention will be better understood in relation to
- Figure 1 which depicts a schematic drawing of a dispenser of the present invention ;
- Figure 2 which illustrates one method of allowing a customer to choose between a standard coffee beverage or a customized beverage ;
- Figure 3 which depicts a schematic drawing of another embodiment of a dispenser of the present invention ;
- Figure 4 which illustrates one method of allowing a customer to choose between a predefined coffee based beverage or to customize a predefined coffee based beverage.

### Detailed description of the drawings

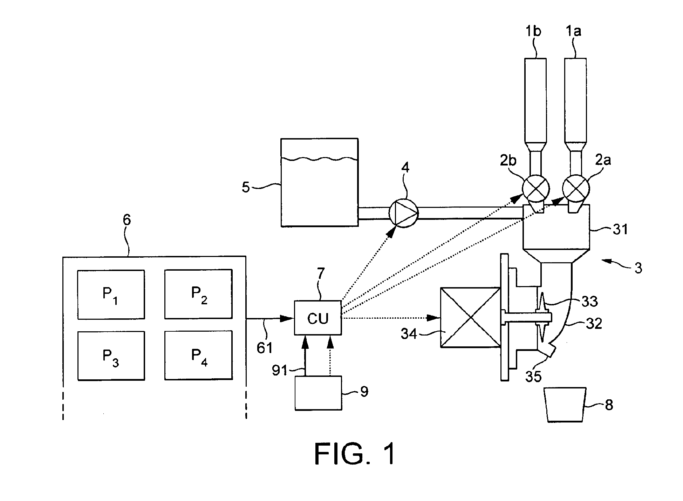

Figure 1 is a schematic drawing of an embodiment of a dispenser of the present invention. The illustrated dispenser comprises means for preparing a beverage from concentrated food ingredients, preferably concentrated coffee products. This means includes two containers 1 a, 1 b storing different beverage soluble concentrated ingredients, preferably coffee concentrate soluble in water. Yet a greater number of different ingredients could also be used according to the present invention. For example the dispenser can contain several soluble coffee concentrates differing by their origins, several soluble coffee concentrates differing by their blends, several soluble coffee concentrates differing by their roasting colors, several soluble coffee concentrates differing by their caffeine contents (decaffeinated, half decaffeinated), ...

The means for preparing a beverage comprises a dosing device 2a, 2b associated to each container 1 a, 1 b for measuring a dose of ingredient and for delivering said dose to a whipper device 3. The dispenser comprises a source of diluent that is a tank of water 5, preferably heated water, connected to a pump 4. The pump delivers the pumped diluent to the whipper device 3.

The whipper device 3 of the illustrated dispenser comprises a dissolution chamber 31 in which the dose of coffee ingredient and the pumped diluent are introduced and a whipper chamber 32 situated downstream to the dissolution chamber 31 and in which a whipper 33 is able to whip the mixture of coffee ingredient and diluent. The whipper is actuated by a motor 34. The whipper chamber 32 also comprises an outlet for delivering the whipped mixture to a cup 8.

The dispenser comprises a control unit 7 able to control the coffee ingredient dosing devices 2a, 2b, the whipper motor 34, the diluent pump means 4. The control unit can execute computer executable program instructions stored in a memory 9.

The dispenser comprises a user interface 6, comprising an input and output device, such as a display device, so that the consumer can make a beverage type selection. The controller can present to the consumer a list of selectable sensory parameters P₁, P₂, P₃, P₄, ... in the display device. A processor can facilitate the consumer's selection of a particular sensory profile via the display device. The consumer may select at least one of the parameters using the display device, for instance, pressing a button provided by or associated with the display device or by touching the screen if the display device is a touch screen. The user interface 6 comprises means for receiving at least one input 61 from the consumer regarding at least one of said parameters. Said input 61 is transmitted to the control unit 7 which may obtain from a local memory 9 or may communicate via a network, with at least one database 9, or may communicate with at least one data processing resource 9, such as server, to obtain corresponding process information 91 for forming the beverage with the selected sensory profile according to the input 61. The control unit can utilize the information to control the one or more dosing device, 2a, 2b and/or the pump 4 and/or the whipping device 3, to form and dispense a product or beverage into the cup 8 according to the sensory profile selected by the customer.

The dispenser can comprise an enhanced view graphical user interface, which can provide a consumer with selectable beverage types (espresso, ristretto, cappuccino, ...) and then selectable sensory profile parameters in a series of dynamically generated menus, wherein the consumer can locate and select a specific sensory profile of a desired beverage type. Once a particular beverage type is selected, the consumer can select the sensory profile of said selected beverage type and then cause a corresponding beverage to be formulated and dispensed by the dispenser.

Preferably at least one of the selectable sensory parameters P₁, ..., P₄ relates at least to one of the following beverage sensory properties :
- the foam or crema quality, the foam referring to a chocolate or milk based beverage while the crema referring to a black coffee,
- the aroma,
- the flavor, and/or
- the mouthfeel.

Concerning the foam or crema quality, the user interface can present to the consumer at least one quality property comprised in the list of :
- foam or crema quantity. By foam quantity, it is meant the quantity of the foam at the surface of the beverage.
- foam or crema stiffness. By foam stiffness, it is meant the ability of the foam or crema to be taken with a spoon and to stay in the spoon when it is tilted.
- foam or crema density, By foam density, it is meant the visual appearance of the crema or the foam that is the bubble size. Low density means aerated big bubbles whereas high density means compact and very small or no bubbles.
- foam or crema colour. By foam colour, it is meant the darkness of the crema at the top of a black coffee or the whiteness of the foam at the top of a milk based beverage or the intensity of the colour from light to dark for the foam for a chocolate beverage.

The crema or foam quality selected by the consumer can be reached by the selection of at least one beverage ingredient known for its foam properties, the choice of the dosage of the ingredient, the choice of the speed of the whipper device and/or the choice of the time for the water delay.

Concerning the aroma, the user interface can present to the consumer at least one property comprised in the list of :
- coffee aroma corresponding to an intense fresh coffee without off-note,
- roasty aroma corresponding to the aroma of a roasted coffee,
- fruity aroma corresponding to fruity, winy, flowery aroma.

The aroma quality selected by the consumer can be reached by the choice of at least one coffee ingredient known for its aroma properties and its dosage.

Concerning the flavor, the user interface can present to the consumer at least one taste property comprised in the list of :
- bitterness,
- spiciness,
- acidity.

The flavor quality selected by the consumer can be reached by the choice of at least one beverage ingredient known for its taste properties and its dosage.

Concerning the mouthfeel, the user interface can present to the consumer at least one mouthfeel property comprised in the list of :
- body corresponding to the apparent viscosity, thickness and weight in the mouth,
- persistency corresponding to all types of aftertaste remaining in the mouth after swallowing,
- astringency corresponding to chemical feeling on the tongue described as puckering or dry and associated with substances such as tannins.

The mouthfeel quality selected by the consumer can be reached by the choice of at least one coffee ingredient known for its taste properties, its dosage and the speed of the whipper device.

For each beverage property the user interface can present to the customer different strength levels that he/she can chose. For example the user interface can propose at least one of the following selectable strengths :
- no, medium or high level of foam/crema quantity,
- no, medium or high level of foam/crema stiffness,
- no, medium or high level of foam/crema density,
- light, medium or strong crema darkness or light, medium or strong foam whiteness,
- light, medium or strong coffee aroma,
- light, medium or strong roasty aroma,
- light, medium or strong fruity aroma,
- light, medium or strong bitterness,
- light, medium or strong spiciness,
- light, medium or strong acidity,
- light, medium or strong body,
- light, medium or strong persistency,
- light, medium or strong astringency.

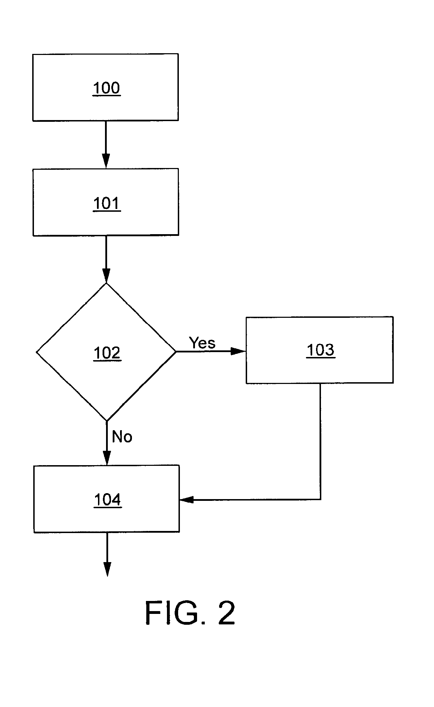

Referring to Figure 2, an example of a method for operating a beverage dispenser is illustrated. The method begins in block 100. In block 100, an input is received from the consumer to select a coffee beverage type like espresso, ristretto, cappuccino, .... Block 100 is followed by block 101, the control unit 7 of the dispenser illustrated in Figure 1, generate or otherwise transmit a communication to the consumer that allows him to make a coffee sensory customization of the selected a coffee beverage type profile. For example, the control unit 7 can provide a message via an output device, such as a user interface 6. Block 101 is followed by block 102, in which a determination is made as to whether the consumer wants to customize the sensory profile. If the determination is in the affirmative, that is, the consumer wants to customize the beverage type, then the method continues at block 103. In block 103, an input is received from the consumer via a user interface, such as 6 in the dispenser of Figure 1 to adjust all or some coffee sensory profile parameters P₁, P₂, P₃, P₄, ... of the selected beverage type. Coffee sensory profile parameters can include, but are not limited to, the crema quality, the aroma, the flavor and/or the mouthfeel. Block 103 is followed by block 104, in which the customized beverage is dispensed to the consumer. If in block 102 the determination is in the negative, that is, the consumer does not want to customize the beverage type, then the method continues at block 104.

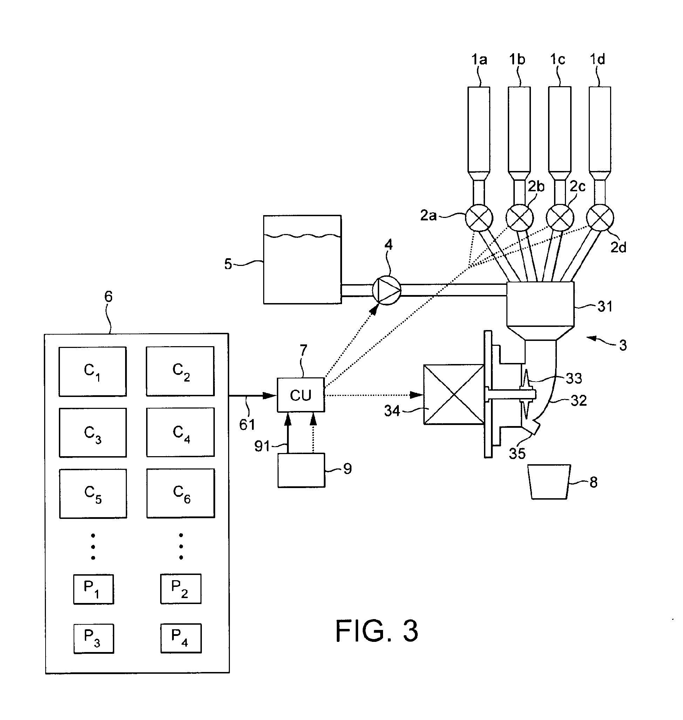

Figure 3 is a schematic drawing of an embodiment of a specific embodiment of adispenser of the present invention. The illustrated dispenser comprises means for preparing a beverage from concentrated soluble coffee products. This means includes four containers 1 a, 1 b, 1 c, 1 d storing coffee concentrates soluble in water. Yet a greater number of different ingredients could also be used according to the present invention. These different coffee concentrates can differ at least by their origins, their blends of different soluble coffees, their roasting colors and/or their caffeine contents (decaffeinated, half decaffeinated).

The means for preparing a beverage comprises a dosing device 2a, 2b, 2c, 2d associated to each container 1 a, 1 b, 1 c, 1 d for measuring a dose of ingredient and for delivering said dose to a whipper device 3. The dispenser comprises a source of diluent that is a tank of water 5, preferably heated water, connected to a pump 4. The pump delivers the pumped diluent to the whipper device 3.

The whipper device 3 of the illustrated dispenser comprises a dissolution chamber 31 in which the dose of coffee ingredient and the pumped diluent are introduced and a whipper chamber 32 situated downstream to the dissolution chamber 31 and in which a whipper 33 is able to whip the mixture of coffee ingredient and diluent. The whipper is actuated by a motor 34. The whipper chamber 32 also comprises an outlet for delivering the whipped mixture to a cup 8.

The dispenser comprises a control unit 7 able to control the coffee ingredient dosing devices 2a, 2b,2c, 2d, the whipper motor 34, the diluent pump means 4. The control unit can execute computer executable program instructions stored in a memory 9.

The dispenser comprises a user interface 6, comprising an input and output device, such as a display device, so that the consumer can make a beverage type selection. The controller presents to the consumer a list of n+1 selectable predefined coffee based beverages (C1, C2, C3, C4, C5, C6, ...) in the display device. These beverages can be presented with trademark names or can be associated to specific colors so that the consumer can immediately identify the predefined coffee based beverage he knows and he wants.

The user interface presents to the customer two options that are either:
- according to a fist option, the selection of one of the predefined coffee beverages
- or, according to a second option, the customization of one predefined coffee beverages. In the second option, the user interface presents to the customer the list of predefined coffee beverages (C1, C2, C3, C4, C5, C6, ...) so he can select the predefined coffee beverage he wants to customize and then a list of selectable coffee sensory profile parameters (P1, P2, P3, P4) so that he can make his customization.

The consumer may select his beverage or his customisation using the display device, for instance, pressing a button provided by or associated with the display device or by touching the screen if the display device is a touch screen. The user interface 6 comprises means for receiving at least one input 61 from the consumer regarding the beverage to be prepared. Said at least one input 61 is transmitted to the control unit 7 which may obtain corresponding process information 91 for forming the selected beverage according to the input 61 :
- from a local database 9,
- or by communication via a network with at least one database 9.

The processor can utilize the information to control the one or more dosing device, 2a, 2b, 2c and 2d and/or the pump 4 and/or the whipping device 3, to form and dispense the beverage into the cup 8.

The dispenser can comprise an enhanced view graphical user interface, which can provide a consumer with selectable predefined coffee based beverages and selectable coffee sensory profile parameters in a series of dynamically generated menus, wherein the consumer can locate and select a predefined coffee based beverage and eventually specific sensory profile of said beverage.

If the consumer selects one of the predefined coffee based beverages C1, then the control unit controls the selection of at least one of the concentrated coffee products, the dosage of the concentrated coffee product(s), the diluent delay, the whipper time, the whipper speed device for preparing the predefined coffee based beverage C1 based on C1 recipe data stored in the database 9.

If the consumer selects the customisation of one of the predefined coffee based beverages C1 and gives input for the sensory profile parameter of his customised beverage C1, then the control unit controls the selection of at least one of the concentrated coffee products, the dosage of the concentrated coffee product(s), the diluent delay, the whipper time, the whipper speed device for preparing the predefined coffee based beverage C1 based on C1 recipe data stored in the database 9 and on coffee sensory parameters control data stored in the database 9.

As for the selection of the selectable coffee sensory parameters P₁, ..., P₄, the dispenser works as described in the dispenser of Figure 1.

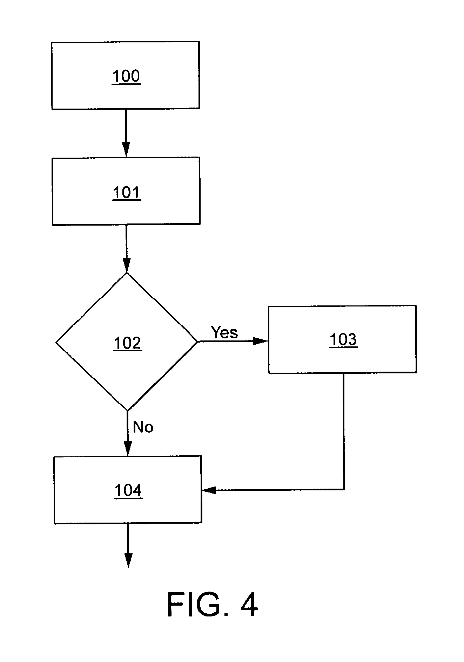

Referring to Figure 4, an example of a method for operating the coffee beverage dispenser of Figure 3 is illustrated. The method begins in block 100. In block 100, an input is received from the consumer to select a predefined coffee based beverage. Block 100 is followed by block 101 in which the control unit 7 of the dispenser illustrated in Figure 3, generate or otherwise transmit a communication to the consumer that allows him to make a coffee sensory customization of the predefined coffee based beverage selected in block 100. For example, the control unit 7 can provide a message via an output device, such as a user interface 6, proposing to customise the froth or foam, the aroma, the flavor and/or the mouthfeel of the predefined coffee based beverage selected in block 100. Block 101 is followed by block 102, in which a determination is made as to whether the consumer wants to customize the selected predefined coffee based beverage. If the determination is in the affirmative, that is, the consumer wants to customize the beverage type, then the method continues at block 103. In block 103, an input is received from the consumer via a user interface, such as 6 in the dispenser of Figure 3 to adjust all or some coffee sensory profile parameters P₁, P₂, P₃, P₄, ... of the selected beverage type. Block 103 is followed by block 104, in which the customized beverage is dispensed to the consumer. If in block 102 the determination is in the negative, that is, the consumer does not want to customize the beverage type, then the method continues at block 104 by dispensing the predefined coffee based beverage selected in block 100.

This dispenser presents the advantage of proposing different preselected optimised coffee beverages that can be prepared from only a limited number of basic concentrated coffee products. Although presenting a small footprint the dispenser can provide a great number of coffee based beverage by mixing the ratio of the different basic concentrated coffee products. It presents the advantage of enabling the customer to customize his coffee beverage starting from a selected predefined coffee based beverage. The customization enable the fine tuning of this predefined coffee based beverage based on sensory parameters. Consequently the dispenser does not enable the customer to prepare infinity of coffee beverages, most of them not presenting a disappointing taste. The dispenser can guide the customer in the selection of coffee beverages.

## Claims

1. A beverage dispenser comprising :
- means for preparing a beverage from at least a soluble powder, comprising :
. at least one source of a soluble powder (1 a, 1 b),
. at least one dosing device (2a, 2b) operably associated with the source of powder,
. a source of diluent (5),
. a pump (4) operably associated with the source of diluent,
- a user interface (6) operable :
. to interact with a consumer for presenting to the consumer at least one of a list of selectable beverage sensory parameters (P₁, P₂, P₃, P₄) related at least to one of the following beverage sensory properties : the foam or crema quality, the aroma, the flavor and/or the mouthfeel, and
. for receiving at least one input (61) from the consumer regarding at least one of said parameters,
**characterized in that** it comprises :
- a whipping device (3) operably associated with the diluent pump and the at least one soluble powder dosing device for receiving and whipping the diluent and the soluble powder to prepare a beverage.
- a control unit (7) controlling the means for preparing a beverage and dispensing a beverage wherein the control unit (7) instructs the at least one dosing device (2a, 2b), the pump (4), the whipping device (3) and controls the selection of the soluble powder, the soluble powder dosage, the water delay, the whipping time, the whipping speed device based at least in part on the at least one input (61) of the consumer regarding at least one of the selectable sensory parameters.

2. A beverage dispenser according to Claim 1 wherein it comprises several sources of soluble powders (1 a, 1 b).

3. A beverage dispenser according to Claim 1 or 2 wherein the user interface (6) presents to the consumer at least one beverage sensory parameter relative to the crema or foam quality and proposes to the consumer to select at least one foam or crema quality property comprised in the list of : crema or foam quantity, crema or foam stiffness, crema or foam density, crema or foam darkness.

4. A beverage dispenser according to the precedent claim wherein according to the selection of the beverage sensory parameter relative to the crema or foam quality made by the consumer the control unit (7) controls the selection of at least one soluble powder known for its foam properties, the choice of the dosage of said powder, the choice of the speed of the whipper device and/or the choice of the time for the water delay.

5. A beverage dispenser according to any one of the precedent claims wherein the user interface (6) presents to the consumer at least one beverage sensory parameter relative to the aroma and proposes to the consumer to select at least one aroma property comprised in the list of : coffee aroma, roasty aroma, fruity aroma.

6. A beverage dispenser according to the precedent claim wherein according to the selection of the beverage sensory parameter relative to the aroma made by the consumer the control unit (7) controls the choice of at least one soluble powder known for its aroma properties and its dosage.

7. A beverage based product beverage dispenser according to any one of the precedent claims wherein the user interface (6) presents to the consumer at least the beverage sensory parameter relative to the flavor and proposes to the consumer to select at least one flavor property comprised in the list of: bitterness, spiciness, acidity.

8. A beverage dispenser according to the precedent claim wherein according to the selection of the beverage sensory parameter relative to the flavor made by the consumer the control unit (7) controls the choice of at least one soluble powder known for its taste properties and its dosage.

9. A beverage dispenser according to any one of the precedent claims wherein the user interface (6) presents to the consumer at least the beverage sensory parameter relative to the mouthfeel and proposes to the consumer to select at least one mouthfeel property comprised in the list of: body, persistency, astringency.

10. A beverage dispenser according to the precedent claim wherein according to the selection of the beverage sensory parameter relative to the mouthfeel made by the consumer the control unit (7) controls the choice of at least one soluble powder known for its taste properties, its dosage and the speed of the whipper device.

11. A beverage dispenser according to any one of the precedent claims wherein the user interface (6) presents to the consumer at least one list of different selectable soluble coffee powders and an adjustable ratio of said soluble coffee powders and proposes to the consumer to select at least one soluble coffee powder and optionally its ratio.

12. A method for operating a beverage dispenser,
said dispenser comprising :
- at least one dosing device (2a, 2b) operably associated with at least one source of soluble powder,
- a pump (4) operably associated with a source of diluent,
- a whipping device (3) operably associated with the pump and the at least one soluble powder dosing device,
the method comprising the steps of:
- presenting at least one of a list of selectable sensory parameters (P₁, P₂, P₃, P₄), chosen in the list of the foam or crema quality, the aroma, the flavor and/or the mouthfeel of the beverage,
- receiving at least one input (61) regarding at least one of these parameters,
- dispensing a beverage based at least in part on the selectable parameters,
wherein the beverage product is dispensed based at least in part on the selectable parameters by instructing the at least one dosing device (2a, 2b), the pump (4) and the whipping device (3) and by monitoring the activation of the at least one dosing device (2a, 2b), the whipper speed of the whipping device (3) and the diluent delay.

13. A method for setting a beverage dispenser according to a sensory profile,
said dispenser comprising :
- at least one dosing device (2a, 2b) operably associated with at least one source of soluble powder,
- a pump (4) operably associated with a source of diluent,
- a whipping device (3) operably associated with the pump and the at least one soluble coffee powder dosing device,
the method comprising the steps of:
- defining the parameters of the sensory profile (P₁, P₂, P₃, P₄), chosen in the list of the foam or crema quality, the aroma, the flavor and/or the mouthfeel of the beverage,
- setting instructions for the at least one dosing device (2a, 2b), the pump (4) and/or the whipping device (3) based at least in part on the defined parameters.

## Patentansprüche

1. Getränkespender mit:
- Einrichtungen zur Zubereitung eines Getränks aus mindestens einem löslichen Pulver, mit:
• mindestens einer Quelle eines löslichen Pulvers (1a, 1b),
• mindestens einer Dosiervorrichtung (2a, 2b), die mit der Pulverquelle operativ verbunden ist,
• eine Quelle von Verdünnungsmittel (5),
• eine Pumpe (4), die mit der Verdünnungsmittelquelle operativ verbunden ist,
- einer Benutzeroberfläche (6), die bedienbar ist:
• um mit einem Verbraucher zusammenzuwirken, um dem Verbraucher mindestens einen Parameter aus einer Liste von auswählbaren sensorischen Getränkeparametern (P₁, P₂, P₃, P₄) aufzuzeigen, der zumindest eine der nachfolgenden sensorischen Getränkeeigenschaften betrifft: die Schaum- oder Cremaqualität, das Aroma, den Geschmack und/oder das Mundgefühl, und
• um mindestens eine Eingabe (61) von dem Verbraucher bezüglich mindestens eines der Parameter zu erhalten,
**dadurch gekennzeichnet, dass** er Folgendes umfasst:
- eine Aufschlageinrichtung (3), die mit der Verdünnungsmittelpumpe und der mindestens einen Dosiervorrichtung für lösliches Pulver zum Aufnehmen und Aufschlagen des Verdünnungsmittels und des löslichen Pulvers zur Zubereitung eines Getränks operativ verbunden ist,
- eine Steuereinheit (7), die die Einrichtung zum Zubereiten eines Getränks und Abgeben eines Getränks steuert, wobei die Steuereinheit (7) die mindestens eine Dosiervorrichtung (2a, 2b), die Pumpe (4), die Aufschlageinrichtung (3) anweist und die Auswahl des löslichen Pulvers, die Dosierung des löslichen Pulvers, die Wasserverzögerung, die Aufschlagzeit, die Aufschlaggeschwindigkeitsvorrichtung zumindest teilweise auf der Grundlage von der mindestens einen Eingabe (61) des Verbrauchers bezüglich mindestens eines der auswählbaren sensorischen Parameter steuert.

2. Getränkespender gemäß Anspruch 1, wobei er mehrere Quellen von löslichen Pulvern (1a, 1b) aufweist.

3. Getränkespender gemäß Anspruch 1 oder 2, wobei die Benutzeroberfläche (6) dem Verbraucher mindestens einen sensorischen Getränkeparameter bezüglich der Crema- oder Schaumqualität aufzeigt und dem Verbraucher vorschlägt, mindestens eine Eigenschaft der Schaum- oder Cremaqualität auszuwählen, die in der Liste von: Crema- oder Schaummenge, Crema- oder Schaumsteifigkeit, Crema- oder Schaumdichte, Crema- oder Schaumdunkelheit enthalten ist.

4. Getränkespender gemäß dem vorhergehenden Anspruch, wobei gemäß der von dem Verbraucher getroffenen Auswahl des sensorischen Getränkeparameters bezüglich der Crema- oder Schaumqualität die Steuereinheit (7) die Auswahl von mindestens einem löslichen Pulver, das für seine Schaumeigenschaften bekannt ist, die Wahl der Dosierung dieses Pulvers, die Wahl der Geschwindigkeit der Aufschlageinrichtung und/oder die Wahl der Zeit für die Wasserverzögerung steuert.

5. Getränkespender gemäß einem der vorhergehenden Ansprüche, wobei die Benutzeroberfläche (6) dem Verbraucher mindestens einen sensorischen Getränkeparameter bezüglich des Aromas aufzeigt und dem Verbraucher vorschlägt, mindestens eine Aromaeigenschaft auszuwählen, die in der Liste von: Kaffeearoma, Röstaroma, Fruchtaroma enthalten ist.

6. Getränkespender gemäß dem vorhergehenden Anspruch, wobei gemäß der von dem Verbraucher getroffenen Auswahl des sensorischen Getränkeparameters bezüglich des Aromas die Steuereinheit (7) die Wahl von mindestens einem löslichen Pulver steuert, das für seine Aromaeigenschaften und seine Dosierung bekannt ist.

7. Getränkespender für ein Produkt auf Getränkebasis gemäß einem der vorhergehenden Ansprüche, wobei die Benutzeroberfläche (6) dem Verbraucher zumindest den sensorischen Getränkeparameter bezüglich des Geschmacks aufzeigt und dem Verbraucher vorschlägt, mindestens eine Geschmackseigenschaft auszuwählen, die in der Liste von: Bitterkeit, Würzigkeit, Schärfe enthalten ist.

8. Getränkespender gemäß dem vorhergehenden Anspruch, wobei gemäß der von dem Verbraucher getroffenen Auswahl des sensorischen Getränkeparameters bezüglich des Geschmacks die Steuereinheit (7) die Wahl von mindestens einem löslichen Pulver steuert, das für seine Geschmackseigenschaften und seine Dosierung bekannt ist.

9. Getränkespender gemäß einem der vorhergehenden Ansprüche, wobei die Benutzeroberfläche (6) dem Verbraucher zumindest den sensorischen Getränkeparameter bezüglich des Mundgefühls aufzeigt und dem Verbraucher vorschlägt, mindestens eine Mundgefühleigenschaft auszuwählen, die in der Liste von: Körper, Beständigkeit, Härte enthalten ist.

10. Getränkespender gemäß dem vorhergehenden Anspruch, wobei gemäß der von dem Verbraucher getroffenen Auswahl des sensorischen Getränkeparameters bezüglich des Mundgefühls die Steuereinheit (7) die Wahl des mindestens einen löslichen Pulvers steuert, das für seine Geschmackseigenschaften, seine Dosierung und die Geschwindigkeit der Aufschlageinrichtung bekannt ist.

11. Getränkespender gemäß einem der vorhergehenden Ansprüche, wobei die Benutzeroberfläche (6) dem Verbraucher zumindest eine Liste von verschiedenen auswählbaren löslichen Kaffeepulvern sowie ein einstellbares Verhältnis dieser löslichen Kaffeepulver aufzeigt und dem Verbraucher vorschlägt, mindestens ein lösliches Kaffeepulver und wahlweise dessen Verhältnis auszuwählen.

12. Verfahren zum Betätigen eines Getränkespenders, wobei der Spender Folgendes umfasst:
- mindestens eine Dosiervorrichtung (2a, 2b), die mit mindestens einer Quelle von löslichem Pulver operativ verbunden ist,
- eine Pumpe (4), die mit einer Verdünnungsmittelquelle operativ verbunden ist,
- eine Aufschlageinrichtung (3), die mit der Pumpe und der mindestens einen Dosiervorrichtung für lösliches Pulver operativ verbunden ist,
wobei das Verfahren folgende Schritte umfasst:
- Aufzeigen von mindestens einem Parameter aus einer Liste von auswählbaren sensorischen Parametern (P₁, P₂, P₃, P₄), die aus der Liste der Schaum- oder Cremaqualität, des Aromas, des Geschmacks und/oder des Mundgefühls des Getränks gewählt werden,
- Erhalten von mindestens einer Eingabe (61) bezüglich mindestens einem dieser Parameter,
- Abgeben eines zumindest teilweise auf den auswählbaren Parametern basierenden Getränks,
wobei das Getränkeprodukt zumindest teilweise auf der Grundlage der auswählbaren Parameter abgeben wird, indem die mindestens eine Dosiervorrichtung (2a, 2b), die Pumpe (4) und die Aufschlageinrichtung (3) angewiesen werden und indem die Betätigung der mindestens einen Dosiervorrichtung (2a, 2b), die Aufschlaggeschwindigkeit der Aufschlageinrichtung (3) sowie die Verdünnungsmittelverzögerung überwacht werden.

13. Verfahren zum Einstellen eines Getränkespenders gemäß einem sensorischen Profil, wobei der Spender Folgendes umfasst:
- mindestens eine Dosiervorrichtung (2a, 2b), die mit mindestens einer Quelle von löslichem Pulver operativ verbunden ist,
- eine Pumpe (4), die mit einer Verdünnungsmittelquelle operativ verbunden ist,
- eine Aufschlageinrichtung (3), die mit der Pumpe und der mindestens einen Dosiervorrichtung für lösliches Kaffeepulver operativ verbunden ist,
wobei das Verfahren folgende Schritte umfasst:
- Festlegen der Parameter des sensorischen Profils (P₁, P₂, P₃, P₄), gewählt aus der Liste der Schaum- oder Cremaqualität, des Aromas, des Geschmacks und/oder des Mundgefühls des Getränks,
- Einstellen von Anweisungen für die mindestens eine Dosiervorrichtung (2a, 2b), die Pumpe (4) und/oder die Aufschlageinrichtung (3) zumindest teilweise auf der Grundlage der festgelegten Parameter.

## Revendications

1. Distributeur de boisson comprenant:
- des moyens destinés à préparer une boisson à partir d'au moins une poudre soluble, comprenant :
. au moins une source d'une poudre soluble (1a, 1b),
. au moins un dispositif de dosage (2a, 2b) associé de manière opérationnelle à la source de poudre,
. une source de diluent (5),
. une pompe (4) associée de manière opérationnelle à la source de diluent,
- une interface utilisateur (6) susceptible :
. d'interagir avec un consommateur pour présenter au consommateur au moins un élément d'une liste de paramètres sensoriels de boisson sélectionnables (P₁, P₂, P₃, P₄) se rapportant à au moins l'une des propriétés sensorielles de boisson suivantes : la qualité de mousse ou de crème, l'arôme, la saveur et/ou la sensation en bouche, et
. de recevoir au moins une entrée (61) du consommateur concernant au moins l'un desdits paramètres,
**caractérisé en ce qu'**il comprend :
- un dispositif de fouettage (3) associé de manière opérationnelle à la pompe à diluant et audit au moins un dispositif de dosage de poudre soluble pour recevoir et fouetter le diluant et la poudre soluble afin de préparer une boisson,
- une unité de commande (7) commandant les moyens destinés à préparer une boisson et à distribuer une boisson, dans lequel l'unité de commande (7) donne des instructions audit au moins un dispositif de dosage (2a, 2b), à la pompe (4), au dispositif de fouettage (3) et commande la sélection de la poudre soluble, le dosage de la poudre soluble, le retard de l'eau, le temps de fouettage, le dispositif de vitesse de fouettage en se basant au moins en partie sur ladite au moins une entrée (61) du consommateur concernant au moins l'un desdits paramètres sensoriels sélectionnables.

2. Distributeur de boisson selon la revendication 1, lequel comprend plusieurs sources de poudres solubles (1a, 1b).

3. Distributeur de boisson selon la revendication 1 ou 2, dans lequel l'interface utilisateur (6) présente au consommateur au moins un paramètre sensoriel de boisson relatif à la qualité de la crème ou mousse et propose au consommateur de sélectionner au moins une propriété de qualité de mousse ou crème comprise dans la liste comprenant : quantité de crème ou mousse, consistance de crème ou mousse, densité de crème ou mousse, couleur foncée de crème ou mousse.

4. Distributeur de boisson selon la revendication précédente, dans lequel en fonction de la sélection du paramètre sensoriel de boisson relatif à la qualité de la crème ou mousse faite par le consommateur l'unité de commande (7) commande la sélection d'au moins une poudre soluble connue pour ses propriétés de mousse, le choix du dosage de ladite poudre, le choix de la vitesse du dispositif de fouettage et/ou le choix du temps pour le retard de l'eau.

5. Distributeur de boisson selon l'une quelconque des revendications précédentes, dans lequel l'interface utilisateur (6) présente au consommateur au moins un paramètre sensoriel de boisson relatif à l'arôme et propose au consommateur de sélectionner au moins une propriété d'arôme comprise dans la liste comportant : arôme de café, arôme torréfié, arôme fruité.

6. Distributeur de boisson selon la revendication précédente, dans lequel en fonction de la sélection du paramètre sensoriel de boisson relatif à l'arôme faite par le consommateur l'unité de commande (7) commande le choix d'au moins une poudre soluble connue pour ses propriétés d'arôme et son dosage.

7. Distributeur de boisson de produit à base de boisson selon l'une quelconque des revendications précédentes, dans lequel l'interface utilisateur (6) présente au consommateur au moins le paramètre sensoriel de boisson relatif à la saveur et propose au consommateur de sélectionner au moins une propriété de saveur comprise dans la liste comprenant : amertume, piquant, acidité.

8. Distributeur de boisson selon la revendication précédente, dans lequel en fonction de la sélection du paramètre sensoriel de boisson relatif à la saveur faite par le consommateur l'unité de commande (7) commande le choix d'au moins une poudre soluble connue pour ses propriétés gustatives et son dosage.

9. Distributeur de boisson selon l'une quelconque des revendications précédentes, dans lequel l'interface utilisateur (6) présente au consommateur au moins un paramètre sensoriel de boisson relatif à la sensation en bouche et propose au consommateur de sélectionner au moins une propriété de sensation en bouche comprise dans la liste comprenant : corps, persistance, astringence.

10. Distributeur de boisson selon la revendication précédente, dans lequel en fonction de la sélection du paramètre sensoriel de boisson relatif à la sensation en bouche faite par le consommateur l'unité de commande (7) commande le choix d'au moins une poudre soluble connue pour ses propriétés gustatives, son dosage et la vitesse du dispositif de fouettage.

11. Distributeur de boisson selon l'une quelconque des revendications précédentes, dans lequel l'interface utilisateur (6) présente au consommateur au moins une liste de différentes poudres de café solubles sélectionnables et une proportion réglable desdites poudres de café solubles et propose au consommateur de sélectionner au moins une poudre de café soluble et facultativement sa proportion.

12. Procédé de fonctionnement d'un distributeur de boisson,
ledit distributeur comprenant :
- au moins un dispositif de dosage (2a, 2b) associé de manière opérationnelle à au moins une source de poudre soluble,
- une pompe (4) associée de manière opérationnelle à une source de diluent,
- un dispositif de fouettage (3) associé de manière opérationnelle à la pompe et audit au moins un dispositif de dosage de poudre soluble,
le procédé comprenant les étapes consistant à :
- présenter au moins un élément d'une liste de paramètres sensoriels de boisson sélectionnables (P₁, P₂, P₃, P₄), choisis dans la liste comprenant la qualité de mousse ou de crème, l'arôme, la saveur et/ou la sensation en bouche de la boisson,
- recevoir au moins une entrée (61) concernant au moins l'un de ces paramètres,
- distribuer une boisson en se basant au moins en partie sur les paramètres sélectionnables,
dans lequel le produit de boisson est distribué en se basant au moins en partie sur les paramètres sélectionnables en donnant des instructions audit au moins un dispositif de dosage (2a, 2b), à la pompe (4) et au dispositif de fouettage (3) et en surveillant l'activation dudit au moins un dispositif de dosage (2a, 2b), la vitesse de fouettage du dispositif de fouettage (3) et le retard du diluent.

13. Procédé de réglage d'un distributeur de boisson selon un profil sensoriel,
ledit distributeur comprenant :
- au moins un dispositif de dosage (2a, 2b) associé de manière opérationnelle à au moins une source de poudre soluble,
- une pompe (4) associée de manière opérationnelle à une source de diluent,
- un dispositif de fouettage (3) associé de manière opérationnelle à la pompe et audit au moins un dispositif de dosage de poudre de café soluble,
le procédé comprenant les étapes consistant à :
- définir les paramètres du profil sensoriel (P₁, P₂, P₃, P₄), choisis dans la liste comprenant la qualité de mousse ou de crème, l'arôme, la saveur et/ou la sensation en bouche de la boisson,
- régler des instructions pour ledit au moins un dispositif de dosage (2a, 2b), la pompe (4) et/ou le dispositif de fouettage (3) en se basant au moins en partie sur les paramètres définis.
